# DEMANDE DE BREVET EUROPEEN

(11) **EP 1 142 537 A1**
(43) Date de publication de la demande: **10.10.2001**
(21) Numéro de dépôt: 01470001.7
(22) Date de dépôt: 12.01.2001
(51) Int. Cl.: A61C 5/02, A61C 3/04

(54) **Boîte pour instrument d'endodontie avec moyens pour compter le nombre d'utilisations**

(30) Priorité: 07.04.2000 FR 0004447
(71) Demandeur: Micro Mega, 25000 Besancon (FR)
(72) Inventeur: Landoz, Audrey, 25000 Besancon (FR)
(74) Mandataire: Poupon, Michel

(57) **Abrégé**

Boîte de conditionnement et d'utilisation d'instruments d'endodontie, du type dans lesquelles lesdits instruments d'endodontie sont disposés en vue de leur utilisation séquentielle par le praticien sur un plateau reproduisant les processus opératoires progressifs, ledit plateau, comportant au moins une séquence de traitement identifiée par une couleur, étant disposé dans une boîte comportant un fond et un couvercle, le couvercle étant ôté par le praticien en début de chaque intervention caractérisée en ce que le couvercle (3) est muni d'au moins un compteur du nombre d'utilisations d'une séquence.

**Application** : traitements d'endodontie

## Description

La présente invention a pour objet un perfectionnement apporté aux boîtes de conditionnement et d'utilisation d'instruments d'endodontie, du type dans lesquelles lesdits instruments d'endodontie sont disposés en vue de leur utilisation séquentielle par le praticien sur un plateau reproduisant les processus opératoires progressifs, ledit plateau étant disposé dans une boîte comportant un fond et un couvercle, le couvercle étant ôté par le praticien en début de chaque intervention.

Dans la mise en oeuvre des traitements d'endodontie, le praticien est amené à utiliser des instruments de diamètre et/ou de conicité progressive pour l'alésage des canaux radiculaires des dents.

Afin de faciliter le travail du praticien, on a été amené à proposer des boîtes d'instruments endodontiques dans lesquelles les instruments sont disposés sur un plateau, les schémas opératoires étant représentés sur le plateau, le praticien n'ayant plus qu'à utiliser séquentiellement les instruments selon le schéma choisi.

Afin de différencier les instruments par leur diamètre, le manche des instruments est affecté d'une couleur qui y correspond, par exemple jaune pour un instrument de 20, rouge pour un instrument de 25, bleu pour un instrument de 30.

Il est impératif, pour des raisons d'asepsie de procéder à une stérilisation entre chaque patient quand les instruments ne sont pas limités à une seule utilisation. De plus, il est particulièrement utile au praticien de connaître le nombre d'utilisations, ce afin d'éliminer les instruments ayant déjà une certaine fatigue, avant de prendre le risque d'une rupture par fatigue en cours de traitement. Compte tenu de la dimension des instruments, on ne peut pas envisager de les doter d'un moyen individuel de comptage.

L'invention a pour but de proposer une solution à ce problème.

Conformément à l'invention, on propose à cette fin une boîte de conditionnement et d'utilisation d'instruments d'endodontie, du type dans lesquelles lesdits instruments d'endodontie sont disposés en vue de leur utilisation séquentielle par le praticien sur un plateau reproduisant les processus opératoires progressifs, ledit plateau, comportant au moins une séquence de traitement identifiée par une couleur, étant disposé dans une boîte comportant un fond et un couvercle, le couvercle étant ôté par le praticien en début de chaque intervention caractérisée en ce que le couvercle est muni d'au moins un compteur du nombre d'utilisations d'une séquence.

Ainsi, dans le cas de trois séquences de couleurs différentes, on prévoiera trois compteurs sur le couvercle, chaque compteur étant identifié par la même couleur que la séquence lui correspondant.

Selon une variante de mise en oeuvre, on pourra disposer de trois boîtes contenant chacune un plateau correspondant à une seule séquence, le couvercle étant alors pourvu d'un seul compteur à la couleur de ladite séquence.

En variante, les compteurs pourront assurer par exemple le comptage de 0 pour une séquence neuve jusqu'à un nombre correspondant au nombre d'utilisations maximum des instruments conseillé par le fabricant.

Les compteurs peuvent être réalisés par exemple à l'aide de dispositifs rotatifs préférablement pourvus d'un système de cliquet permettant une sensation tactile de la position. On peut aussi les réaliser sous la forme d'un curseur linéaire.

On comprendra mieux l'invention à l'aide de la description faite ci-après d'un mode de mise en oeuvre donné à titre d'exemple non limitatif, en référence aux dessins annexés dans lesquels :

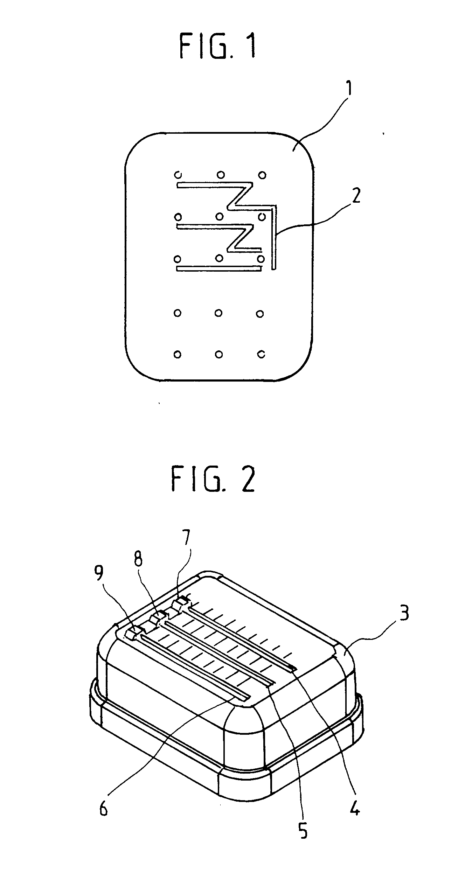

- la figure 1 est une vue en plan d'un plateau recevant les instruments d'endodontie ;
- la figure 2 est une vue d'un couvercle de boîte conforme à l'invention dans un mode de réalisation où le plateau est pourvu de trois séquences d'instruments.

Il est connu de disposer dans une boîte constituée d'un fond et d'un couvercle un plateau (1) dans lequel sont positionnés perpendiculairement au plan principal de celui-ci les instruments d'endodontie, se composant essentiellement de manière connue d'un manche de préhension et d'une lame flexible d'alésage.

Pour faciliter le travail du praticien, les instruments sont disposés de manière ordonnée par taille en fonction de leur diamètre et de leur conicité.

De manière connue, on prévoiera des séquences d'instruments de conicité 6%, 4%, 2% pour des diamètres de 20, 25 et 30.

Les instruments de chaque série de diamètre identique sont identifiés par une couleur de manche spécifique.

Les schémas opératoires progressifs sont représentés par des séquences (2) sur le plateau.

Conformément à l'invention, on prévoiera sur le couvercle (3) autant de rainures (4, 5, 6) que de couleurs de manches d'instruments.

Dans chaque rainure coulisse un curseur (7,8,9) selon des graduations de 0 à 10 sur chaque rainure.

On peut ainsi visualiser le nombre d'utilisations de chaque série d'instruments, ce qui permet de déterminer le moment où chacune doit être éliminée.

## Revendications

1. Boîte de conditionnement et d'utilisation d'instruments d'endodontie, du type dans lesquelles lesdits instruments d'endodontie sont disposés en vue de leur utilisation séquentielle par le praticien sur un plateau reproduisant les processus opératoires progressifs, ledit plateau, comportant au moins une séquence de traitement identifiée par une couleur, étant disposé dans une boîte comportant un fond et un couvercle, le couvercle étant ôté par le praticien en début de chaque intervention **caractérisée en ce que** le couvercle (3) est muni d'au moins un compteur du nombre d'utilisations d'une séquence.

2. Boîte de conditionnement selon la revendication 1, **caractérisée en ce qu'**elle comporte trois compteurs correspondant chacun à la couleur d'une séquence d'instruments d'endodontie.

3. Boîte de conditionnement selon l'une quelconque des revendications 1 et 2, **caractérisée en ce que** chaque compteur assure le comptage de 0 pour une séquence neuve jusqu'à un nombre correspondant au nombre d'utilisations maximum des instruments conseillé par le fabricant.

4. Boîte de conditionnement selon l'une quelconque des revendications 1 et 3, **caractérisée en ce que** les compteurs sont réalisés à l'aide de dispositifs rotatifs pourvus d'un système de cliquet permettant une sensation tactile de la position.

5. Boîte de conditionnement selon l'une quelconque des revendications 1 et 3, **caractérisée en ce que** les compteurs sont des curseurs linéaires (7,8,9) se déplaçant dans des rainures (4,5,6).
